Europäisches Patentamt

European Patent Office

Office européen des brevets

(11) Publication number: **0 186 372**
**B1**

# (12) EUROPEAN PATENT SPECIFICATION

(45) Date of publication of patent specification: **31.08.88**

(51) Int. Cl.⁴: **B 60 K 15/02**

(21) Application number: **85308964.7**

(22) Date of filing: **10.12.85**

(54) Vehicle fuel tank venting system.

(30) Priority: **12.12.84 GB 8431386**

(43) Date of publication of application:
**02.07.86 Bulletin 86/27**

(45) Publication of the grant of the patent:
**31.08.88 Bulletin 88/35**

(84) Designated Contracting States:
**DE FR GB IT SE**

(56) References cited:
**DE-A-2 223 205**
**DE-A-2 607 953**
**DE-A-2 752 645**
**FR-A-2 164 969**
**GB-A-1 062 315**

(73) Proprietor: **FORD MOTOR COMPANY LIMITED**
**Eagle Way**
**Brentwood Essex CM13 3BW (GB)**
(84) **GB IT SE**
(73) Proprietor: **FORD-WERKE**
**AKTIENGESELLSCHAFT**
**Ottoplatz 2 Postfach 21 03 69**
**D-5000 Köln 21 (DE)**
(84) **DE**
(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Pardy, Ronald**
**159 Maldon Road**
**Tiptree Essex (GB)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to vehicle fuel tank systems.

Many motor vehicles have a fuel tank with a filler pipe communicating with the fuel tank below an ullage space and a sensing tube connected to the upper end of the filler pipe. The lower end of the sensing tube communicates with the interior of the tank and defines the lower level of the ullage space.

When a tank of this kind is filled, air/vapour escapes through the sensing tube until the fuel level reaches the lower end of the sensing tube. The fuel then fills the filler pipe until it reaches the filling nozzle and (assuming the normal kind of nozzle is being used) cuts off further supply of fuel.

It is preferable to fit a non-vented filler cap and arrange for venting of the ullage space to allow for withdrawal of fuel from the tank or expansion of fuel into the ullage space. It is a well-known problem with systems of this kind that the ullage space can be "trickle filled" by allowing the level of fuel in the filler pipe to fall as air/vapour exits slowly through the venting system.

It is known (see for example German patents 2046562 and 2752645) to close the vent system by a valve actuated by removal of the filler cap or the opening of a flap covering the filler cap. The vent system is thereby closed whenever the fuel tank is being filled so that the ullage space cannot be "trickle filled" but operates normally to vent the tank as soon as the filler cap has been replaced or the flap closed. This arrangement solves the problem but is somewhat expensive and can leave the tank unvented if a non-standard filler cap is used or if the flap is accidentally left open.

GB Patent Specification No. 1,062,315 describes a fuel tank having an upward filler spout and two vent pipes leading from diagonally opposite corners of the tank, each of the vent pipes having an upward loop of substantially the same height as the filler spout. In this arrangement, the vent pipes will flood up to the loops if the fuel tank is filled right up and fuel will remain trapped in the pipes when the level drops. If excess pressure should now have to be relieved from within the tank, the trapped fuel will result in spillage when the air in the tank is vented.

The present invention seeks to prevent "trickle filling" without the use of such a valve while reducing the risk of spillage when the tank is vented.

According to the present invention, there is provided a vehicle fuel tank system comprising a fuel tank having an ullage space, a filler pipe connected at its lower end to the fuel tank below the ullage space and having a filler cap at its upper end, a sensing tube communicating at its lower end with the interior of the fuel tank to define the ullage space and at its upper end with the interior of the filler pipe adjacent the filler cap, whereby upon filling of the fuel tank air is vented through the sensing tube until the fuel level reaches the lower end of the sensing tube, whereupon further fuel fills the filler pipe to prevent filling of the ullage space; and means venting the ullage space to allow air to enter when fuel is drawn from the fuel tank or to allow air/vapour to exit if the fuel in the tank expands into the ullage space; the venting means comprising a vent tube communicating at one end with the interior of the fuel tank below the ullage space and at the other end with the atmosphere and having intermediate its ends a U-shaped portion the atmosphere end of which extends above the level of the filler cap whereby any filling of the tank above the lower level of the sensing tube cause fuel to rise up the vent tube thereby creating a head of fuel in the U-shaped portion which prevents the level of fuel in the filler tube from falling; and a restricted hole or passage between the upper part of the ullage space and the vent tube for venting the ullage space to atmosphere via the vent tube, wherein a reservoir is provided in the vent tube at or above the level of the filler cap for collecting any fuel in the U-shaped portion and allowing air/vapour to be vented to atmosphere without spillage.

The invention will now be described further, by way of example, with reference to the accompanying drawings, in which:

Figure 1 is a sectional view of a vehicle fuel tank system embodying the invention; and

Figure 2 is an enlarged view of the circled portion of the fuel tank system of Figure 1.

A fuel tank 10 adapted to be mounted at the rear of a motor car (not shown) has a filler pipe 12 connected at its lower end to the fuel tank 10. A filler cap 14 of the non-venting type is mounted on the upper end of the filler pipe 12.

A sensing tube 16 communicates with the upper end of the filler pipe 12 and extends into the fuel tank 10 to define a normal maximum fuel level 18 and an ullage space 20.

A vent tube 22 extends through the highest part of the fuel tank 10 down to a level below the lower end of the sensing tube 16. The vent tube 22 extends from the point at which it enters the fuel tank 10 along the roof of the fuel tank 10, down to a level adjacent the bottom of the sensing tube 16, and upwardly parallel to the filler pipe 12 to a reservoir 24, thus forming a U-shaped portion 30. The upper part of reservoir 24 is vented to atmosphere by a downwardly extending tube 26.

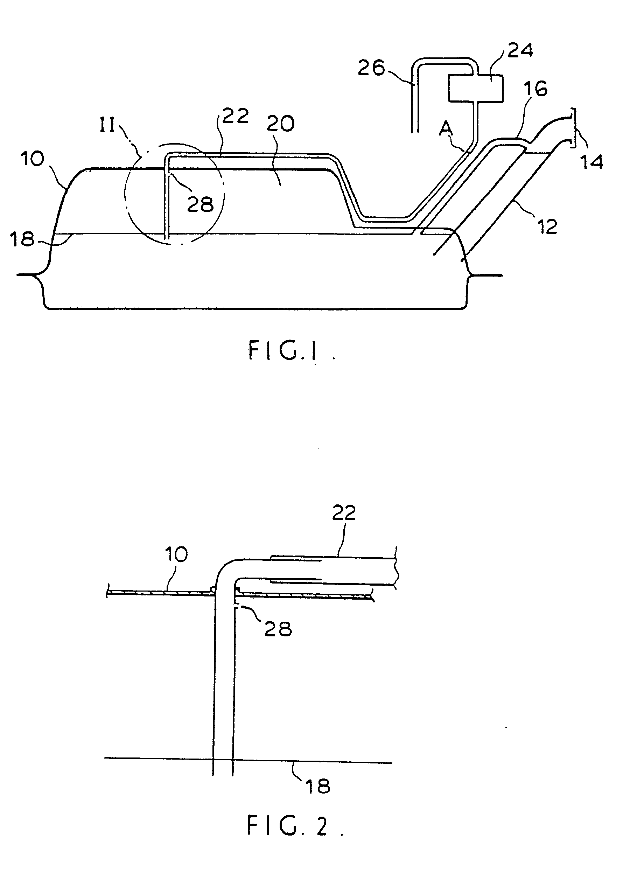

A small hole 28 (Figure 2), approximately 1 mm in diameter, is formed in the vent tube 22 within the fuel tank 10 but adjacent the roof of the fuel tank 10. The diameter of the vent tube 22 is not critical but should be sufficiently large to allow relatively free passage of air, vapour, or fuel to and from the fuel tank 10 but sufficiently small that a compact reservoir 24 can contain the contents of the whole vent tube.

In operation the fuel tank 10 can be filled through the filler pipe 12 until the level of fuel in the fuel tank 10 reaches the lower end of the sensing tube 16. The normal exit of air/vapour from the fuel tank 10 is then cut-off and fuel quickly fills the filler pipe 12 to reach the filler nozzle and shut off the supply of fuel.

The lower end of vent tube 22 is below the fuel level. Air/vapour can vent through the vent hole 28 but this restricted flow is insufficient to prevent the fuel from rising quickly in the filler pipe 12.

Fuel is driven up the vent tube 22 by the head of fuel in the filler pipe 12 until the level of fuel at A in the vent tube 22 is the same as the level of fuel in the filler pipe 12. The U-shaped portion 30 maintains a head of fuel in the vent tube 22 sufficient to prevent further air/vapour being vented from the fuel tank 10, thereby maintaining the ullage space 20 and preventing over filling by trickling fuel into the filler pipe 12.

When the filler cap 14 has been replaced, the fuel in the vent tube 22 is drawn back into the fuel tank 10 as soon as fuel is taken from the fuel tank 10 by the vehicle fuel system (not shown).

Any expansion of the fuel after filling causes air/vapour to vent through the vent hole 28. Any fuel which remains in the U-shaped portion 30 is pushed up to the reservoir 24 and the air/vapour bubbles through it out to the atmosphere via tube 26.

## Claim

A vehicle fuel tank system comprising a fuel tank (10) having an ullage space (20); a filler pipe (12) connected at its lower end to the fuel tank below the ullage space and having a filler cap (14) at its upper end; a sensing tube (16) communicating at its lower end with the interior of the fuel tank (10) to define the ullage space (20) and at its upper end with the interior of the filler pipe (12) adjacent the filler cap (14), whereby upon filling of the fuel tank (10) air is vented through the sensing tube until the fuel level reaches the lower end of the sensing tube (16), whereupon further fuel fills the filler pipe (12) to prevent filling of the ullage space (20); and means venting the ullage space (20) to allow air to enter when fuel is drawn from the fuel tank (10) or to allow air/vapour to exit if the fuel in the tank expands into the ullage space (20); the venting means comprising a vent tube (22) communicating at one end with the interior of the fuel tank (10) below the ullage space (20) and at the other end with the atmosphere and having intermediate its ends a U-shaped portion (30) the atmosphere end of which extends above the level of the filler cap whereby any filling of the tank above the lower level of the sensing tube cause fuel to rise up the vent tube thereby creating a head of fuel in the U-shaped portion which prevents the level of fuel in the filler tube from falling; and a restricted hole or passage (28) between the upper part of the ullage space (20) and the vent tube (22) for venting the ullage space to atmosphere via the vent tube (22), wherein a reservoir (24) is provided in the vent tube (22) at or above the level of the filler cap (16) for collecting any fuel in the U-shaped portion (30) and allowing air/vapour to be vented to atmosphere without spillage.

## Patentanspruch

Fahrzeug-Kraftstoffbehältersystem, umfassend einen Kraftstoffbehälter (10) mit einem Leerraum (20); ein Einfüllrohr (12), das an seinem unteren Ende mit dem Kraftstoffbehälter unterhalb des Leerraums verbunden ist und an seinem oberen Ende mit einem Einfülldeckel (14) ausgestattet ist; ein Fühlerrohr (16), das an seinem unteren Ende mit dem Innern des Kraftstoffbehälters (10), um so den Leerraum (20) zu definieren, und an seinem oberen Ende mit dem Innern des Einfüllrohrs (12) in der Nähe des Einfülldeckels (14) in Verbindung steht, wobei, wenn eine Befüllung des Kraftstoffbehälters (10) erfolgt, Luft durch das Fühlerrohr gedrückt wird, bis das Kraftstoffniveau das untere Ende des Fühlerrohrs (16) erreicht, woraufhin weiterer Kraftstoff in das Einfüllrohr (12) einströmt, um so ein Befüllen des Leerraums (20) zu vermeiden; und Vorrichtungen zur Entlüftung des Leerraums (20), damit Luft einströmen kann, wenn Kraftstoff aus dem Kraftstoffbehälter (10) abgezogen wird, und/oder damit Luft/Dämpfe ausströmen können, wenn sich der Kraftstoff im Behälter in den Leerraum (20) hinein ausdehnt; wobei die Entlüftungsvorrichtungen ein Entlüftungsrohr (22) umfassen, das an einem Ende mit dem Innern des Kraftstoffbehälters (10) unterhalb des Leerraums (20) und am anderen Ende mit der Atmosphäre in Verbindung steht, und das zwischen seinen Enden einen U-förmigen Abschnitt (30) aufweist, dessen atmosphärenseitiges Ende über das Niveau des Einfülldeckels hinausragt, damit jede Befüllung des Behälters über das untere Niveau des Fühlerrohrs hinaus ein Ansteigen des Kraftstoffs im Entlüftungsrohr bewirkt, so daß sich eine Kraftstoffsäule im U-förmigen Abschnitt entwickelt, die es verhindert, daß das Kraftstoffniveau im Einfüllrohr abfällt; und ein Einschnürungsloch oder -durchlaß (28) zwischen dem oberen Teil des Leerraums (20) und dem Entlüftungsrohr (22), um so den Leerraum über das Entlüftungsrohr (22) zur Atmosphäre zu entlüften, wobei ein Reservoir (24) im Entlüftungsrohr (22) auf oder über dem Niveau des Einfülldeckels (14) vorgesehen ist, um so jeglichen Kraftstoff im U-förmigen Abschnitt (30) zu sammeln und es zu ermöglichen, daß Luft/Dämpfe ohne Verluste an die Atmosphäre abgegeben werden können.

## Revendication

Système de réservoir à combustible pour véhicule, comprenant un réservoir à combustible (10) ayant un volume résiduel (20); un tube (12) de remplissage relié par son extrémité inférieure au réservoir à combustible au-dessous du volume résiduel et avant un bouchon de remplissage (14) à son extrémité supérieure; un tube de dégazage (16) qui communique par son extrémité inférieure avec l'intérieur du réservoir à combustible (10) pour définir le volume résiduel (20) et par son extrémité supérieure avec l'intérieur du tube de remplissage (12) à proximité du bouchon de remplissage (14), grâce à quoi lors du remplissage du réservoir à combustible (10), de l'air est mis à l'atmosphère par l'intermédiaire du tube de dégazage jusqu'à ce que le niveau du combustible atteigne l'extrémité inférieure du tube de dégazage (16), à la suite de quoi d'autre combustible remplit le tube de remplissage (12) pour empêcher un remplissage du volume résiduel (20); et des moyens mettant le volume résiduel (20) à l'atmosphère pour permettre à l'air de pénétrer lorsque du combustible est tiré du réservoir (10), ou pour permettre la sortie de l'air et de la vapeur si le combustible se trouvant dans le réservoir se dilate dans l'espace résiduel (20); les moyens de mise à l'atmosphère comprenant un tube d'évent (22) communiquant par une extrémité avec l'intérieur du réservoir à combustible (10) au-dessous du volume résiduel (20) et par son autre extrémité avec l'atmosphère et comportant entre ses extrémités une partie (30) de forme en U, dont l'extrémité située dans l'atmosphère s'étend au-dessus du niveau de remplissage, de telle sorte que tout remplissage du réservoir au-dessus du niveau inférieur du tube de dégazage astreint le fluide à monter dans le tube de mise à l'atmosphère, produisant ainsi une colonne de combustible dans la partie de forme en U qui empêche le niveau de combustible de descendre dans le tube de remplissage; et un trou ou passage étranglé (28) entre la partie supérieure du volume résiduel (20) et le tube (22) de mise à l'atmosphère pour purger le volume résiduel dans l'atmosphère par l'intermédiaire du tube de mise à l'atmosphère (22), dans lequel un réservoir (24) est prévu dans le tube de mise à l'atmosphère au niveau du bouchon de remplissage (16) ou au-dessus de ce niveau, afin de recueillir tout combustible dans la partie (30) de forme en U et de laisser l'air et la vapeur s'échapper à l'atmosphère, sans débordement.

FIG.1.

FIG. 2.